# EUROPEAN PATENT APPLICATION

(11) **EP 4 412 315 A1**
(43) Date of publication of application: **07.08.2024**
(21) Application number: 22889266.7
(22) Date of filing: 01.11.2022
(51) Int. Cl.: H04W 52/02

(54) **TERMINAL DEVICE WAKE-UP METHOD AND APPARATUS IN COMMUNICATION NETWORK, AND READABLE STORAGE MEDIUM**

(30) Priority: 08.11.2021 CN 202111313340
(71) Applicant: Huawei Technologies Co., Ltd., Shenzhen, Guangdong 518129 (CN)
(72) Inventor: LI, Chenwan, Shenzhen, Guangdong 518129 (CN); CHEN, Lei, Shenzhen, Guangdong 518129 (CN); LI, Bingzhao, Shenzhen, Guangdong 518129 (CN); HUO, Dayong, Shenzhen, Guangdong 518129 (CN)
(74) Representative: Maiwald GmbH
(86) International application number: PCT/CN2022/128966
(87) International publication number: WO 2023/078242

(57) **Abstract**

Embodiments of this application disclose a method for waking up a terminal device in a communication network, an apparatus, and a readable storage medium. The method includes: After a terminal device enters an idle state or an inactive state, if the terminal device detects that a doze condition is met, the terminal device enters a doze state from the idle state or the inactive state. In first time since the terminal device enters the doze state, if the terminal device does not receive wake-up information or detects that signal quality of the wake-up information is less than or equal to a first threshold, the terminal device enters a wake-up state from the doze state. According to embodiments of this application, a probability that the terminal device misses important information (for example, a paging message, a system message, and a synchronization signal) can be reduced while reducing power consumption of the terminal device, to balance power consumption and communication quality.

## Description

This application claims priority to Chinese Patent Application No. 202111313340.6, filed with the China National Intellectual Property Administration on November 8, 2021 and entitled "METHOD FOR WAKING UP TERMINAL DEVICE IN COMMUNICATION NETWORK, APPARATUS, AND READABLE STORAGE MEDIUM", which is incorporated herein by reference in its entirety.

### TECHNICAL FIELD

This application relates to the field of communication technologies, and in particular, to a method for waking up a terminal device in a communication network, an apparatus, and a readable storage medium.

### BACKGROUND

With rapid development of wireless communication technologies, to meet and enrich people's increasing demands, a 5th generation mobile communication technology (5th generation mobile communication technology, 5G for short) emerges, which can effectively cope with explosive growth of mobile data traffic in the future, and support massive device connections and various emerging new services.

As a part of 5G, the internet of things (internet of things, IoT) grows rapidly in market demands. Machine type communication (machine type communication, MTC) is short for machine-to-machine transfer of information and data over a wireless network, and is an important development direction of the IoT. Most MTC devices are compact battery-powered systems, such as an intelligent meter reading system, which is used to periodically monitor and report usage of water, electricity, gas, or the like. In addition, an MTC service has some special service characteristics, for example, a small data transmission volume, a distinct service periodicity characteristic, low power consumption, and a large quantity of terminals.

However, an existing terminal device still needs to perform operations such as measurement and reception of a system message, a synchronization signal, and a paging message even in an idle state, and consequently power consumption is very high. Therefore, how to reduce a probability that the terminal device misses important information (for example, the paging message, the system message, and the synchronization signal) while reducing power consumption needs to be explored.

### SUMMARY

Embodiments of this application provide a method for waking up a terminal device in a communication network, an apparatus, and a readable storage medium, so that a probability that the terminal device misses important information (for example, a paging message, a system message, and a synchronization signal) can be reduced while reducing power consumption of a terminal device, to balance power consumption and communication quality.

The following describes this application from different aspects. It should be understood that the following implementations and beneficial effects of the different aspects may be mutually referenced.

According to a first aspect, this application provides a method for waking up a terminal device in a communication network. The method includes: After a terminal device enters an idle state or an inactive state, if the terminal device detects that a doze condition is met, the terminal device enters a doze state from the idle state or the inactive state. If the terminal device does not receive wake-up information or detects that signal quality of the wake-up information is less than or equal to a first threshold in first time since the terminal device enters a doze state, the terminal device enters a wake-up state from the doze state. The doze state may be a state of receiving the wake-up information via a wake-up radio (wake up radio, WUR). The wake-up state may be a state of receiving at least one of the following information: a paging message, a system message, and a synchronization signal.

The doze state may alternatively be understood as at least one of a state of receiving, via the WUR, a message sent by a network side, a state of receiving the wake-up information via the WUR, a state of skipping receiving the paging message, a state of skipping receiving a synchronization signal/physical broadcast channel block (synchronization signal/PBCH block, SSB), a state of skipping performing measurement, and a state of performing relaxed measurement, or a combination of the states.

In this solution, when in an idle state or having no service transmission, the terminal device is enabled to enter the doze state (that is, a state of skipping performing an operation such as receiving a system message, a synchronization signal, and a paging message), to reduce power consumption of the terminal device. In addition, a wake-up condition of the terminal device is restricted to reduce a probability that the terminal device misses important information (for example, the paging message, the system message, and the synchronization signal), to balance the power consumption and communication quality.

With reference to the first aspect, in a possible design, after the terminal device enters the idle state or the inactive state, if the terminal device detects that the doze condition is met, that the terminal device enters a doze state from the idle state or the inactive state includes: after the terminal device enters the idle state or the inactive state, if reference signal quality of a cell on which the terminal device camps is greater than or equal to a second threshold in second time (it indicates that the signal quality of the cell on which the terminal device camps is good, and may reflect that the terminal device is currently very likely to be within coverage of the wake-up information), the terminal device enters the doze state from the idle state or the inactive state. The second time is greater than or equal to 0. The second threshold may be configured by a network device (for example, a base station) in a broadcast manner or in a unicast manner.

Optionally, the quality of the reference signal may be represented by one or more of the following: a reference signal received power (reference signal received power, RSRP) and reference signal received quality (reference signal received quality, RSRQ).

In this solution, after entering the idle state or the inactive state, the terminal device determines, by measuring the reference signal quality of the cell on which the terminal device camps, whether the terminal device can enter the doze state, so that power consumption can be reduced.

With reference to the first aspect, in a possible design, after the terminal device enters the idle state or the inactive state, if the terminal device detects that the doze condition is met, that the terminal device enters a doze state from the idle state or the inactive state includes: after a period of time since the terminal device enters the idle state or the inactive state, the terminal device enters the doze state from the idle state or the inactive state. The period of time is greater than or equal to 0.

In this solution, after entering the idle state or the inactive state, the terminal device enters the doze state after the period of time. This helps reduce power consumption.

With reference to the first aspect, in a possible design, before the terminal device enters the doze state, the method further includes: The terminal device receives configuration information of the wake-up information (sent by the network device), where the configuration information of the wake-up information includes one or more of the following: a periodicity for sending the wake-up information, a quantity of times of repeatedly sending the wake-up information, a frame structure type of the wake-up information, and a length of the first time.

Optionally, the configuration information of the wake-up information is carried in a system information block (system information block, SIB) message.

In this solution, the configuration information of the wake-up information is configured, so that the terminal device subsequently determines whether to wake up, to receive the paging message, the system message, the synchronization signal, and the like.

With reference to the first aspect, in a possible design, before the terminal device enters the doze state, the method further includes: The terminal device sends capability information of the WUR to the network device, where the capability information of the WUR indicates that the terminal device supports use of the WUR to receive the wake-up information. In this solution, the terminal device reports the capability information of the WUR of the terminal device, to support receiving, via the WUR after entering the doze state subsequently, a message sent by the network side.

Optionally, after the terminal device sends the capability information of the WUR to the network device, the method further includes: The terminal device receives indication information sent by the network device, where the indication information indicates that the terminal device receives the wake-up information via the WUR.

In this solution, the network device actively notifies the terminal device of a capability of the network device, so that the terminal device determines whether the terminal device can enter the doze state. In other words, if the network device does not allow the terminal device to receive the wake-up information via the WUR, the terminal device cannot enter the doze state. If the network device allows the terminal device to receive the wake-up information via the WUR, the terminal device can enter the doze state.

According to a second aspect, this application provides a wake-up apparatus. The wake-up apparatus may be a terminal device or a chip or a circuit disposed in a terminal device. The wake-up apparatus includes a processing unit, configured to: if the terminal device does not receive wake-up information or detects that signal quality of the wake-up information is less than or equal to a first threshold in first time since the terminal device enters a doze state, enable the terminal device to enter a wake-up state from the doze state. The doze state is a state of receiving the wake-up information via a WUR, and the wake-up state is a state of receiving at least one of the following information: a paging message, a system message, and a synchronization signal.

The doze state may alternatively be understood as at least one of a state of receiving, via the WUR, a message sent by a network side, a state of receiving the wake-up information via the WUR, a state of skipping receiving the paging message, a state of skipping receiving an SSB, a state of skipping performing measurement, and a state of performing relaxed measurement, or a combination of the states.

With reference to the second aspect, in a possible design, the processing unit is further configured to: after the terminal device enters an idle state or an inactive state, if reference signal quality of a cell on which the terminal device camps is greater than or equal to a second threshold in second time, enable the terminal device to enter the doze state from the idle state or the inactive state, where the second time is greater than or equal to 0.

With reference to the second aspect, in a possible design, the processing unit is further configured to: after a period of time since the terminal device enters the idle state or the inactive state, enter the doze state from the idle state or the inactive state, where the period of time is greater than or equal to 0.

With reference to the second aspect, in a possible design, the wake-up apparatus further includes a transceiver unit, configured to receive configuration information of the wake-up information, where the configuration information of the wake-up information includes one or more of the following: a periodicity for sending the wake-up information, a quantity of times of repeatedly sending the wake-up information, a frame structure type of the wake-up information, and a length of the first time.

Optionally, the configuration information of the wake-up information is carried in a SIB message.

With reference to the second aspect, in a possible design, the wake-up apparatus further includes the transceiver unit, configured to send capability information of the WUR to a network device, where the capability information of the WUR indicates that the terminal device supports use of the WUR to receive the wake-up information.

With reference to the second aspect, in a possible design, the transceiver unit is further configured to receive indication information sent by the network device, where the indication information indicates that the terminal device receives the wake-up information via the WUR.

In any design of the first aspect or the second aspect, the first time is n periodicities for sending the wake-up information, and n is a positive integer. Alternatively, the first time is a preset value or a value configured by the network device.

In any design of the first aspect or the second aspect, the wake-up state is any one of the following states: the idle state, the inactive state, and a connected state.

In any design of the first aspect or the second aspect, the wake-up information is a WUR reference signal. The WUS reference signal includes a preamble. Alternatively, the WUS reference signal includes a preamble and a postamble. Alternatively, the WUS reference signal includes a preamble, a midamble, and a postamble. The preamble (preamble) may be a synchronization sequence, the midamble represents an intermediate sequence, for example, a training sequence (midamble), and the postamble (postamble) represents an end sequence. The three sequences may be the same, or may be different, for example, are inversed with each other.

In this solution, a newly designed WUR reference signal is periodically sent, to determine whether the terminal device is within coverage of the wake-up information, to determine whether the terminal device needs to wake up, so as to reduce a probability that the terminal device misses important information (for example, the paging message, the system message, or the synchronization signal).

In any design of the first aspect or the second aspect, the wake-up information is WUR signaling. The WUR signaling includes one or more of the following: a cell identity, a tracking area code (tracking area code, TAC), a public land mobile network (public land mobile network, PLMN) identity, a configuration update indication, a cell access barring indication, a system message change indication (such as a paging system message change), an identity of the terminal device, and a group identity.

In this solution, existing WUR signaling is periodically sent, and a new wake-up signal does not need to be redesigned, so that signaling overheads can be reduced.

According to a third aspect, this application provides a method for waking up a terminal device in a communication network. The method includes: If time at which a terminal device enters a doze state reaches a wake-up periodicity or time at which a terminal device enters a doze state reaches a wake-up periodicity and receives no wake-up information, the terminal device enters a wake-up state from the doze state. The doze state is a state of receiving the wake-up information via a WUR, and the wake-up state is a state of receiving at least one of the following information: a paging message, a system message, and a synchronization signal.

The doze state may alternatively be understood as at least one of a state of receiving, via the WUR, a message sent by a network side, a state of receiving the wake-up information via the WUR, a state of skipping receiving the paging message, a state of skipping receiving an SSB, a state of skipping performing measurement, and a state of performing relaxed measurement, or a combination of the states.

In this solution, when in an idle state or having no service transmission, the terminal device is enabled to enter the doze state (that is, a state of skipping performing an operation such as receiving the system message, the synchronization signal, and the paging message), to reduce power consumption of the terminal device. In addition, the terminal device periodically wakes up, to reduce a probability that the terminal device misses important information (for example, the paging message, the system message, and the synchronization signal), to balance the power consumption and communication quality.

With reference to the third aspect, in a possible design, before the terminal device enters the doze state, the method further includes: The terminal device receives the wake-up periodicity sent by a network device.

Optionally, the wake-up periodicity is carried in a radio resource control (radio resource control, RRC) connection release message.

In this solution, the network device configures the wake-up periodicity, to support the terminal device in periodically waking up or periodically entering the wake-up state (for example, the idle state) from the doze state, to reduce a chance of missing important information (for example, the paging message, the system message, or the synchronization signal).

With reference to the third aspect, in a possible design, after the terminal device enters the wake-up state from the doze state, the method further includes: If quality of service of a serving cell of the terminal device is greater than or equal to a third threshold in third time (it indicates that the quality of service of the serving cell is good in this case, and reflects that the terminal device is currently very likely to be within coverage of the wake-up information), the terminal device enters the doze state from the wake-up state. If the quality of service of the serving cell of the terminal device is less than the third threshold in the third time (it indicates that the quality of service of the serving cell is poor in this case, and reflects that the terminal device is currently very likely to be outside the coverage of the wake-up information), the terminal device keeps the wake-up state. The third time is greater than or equal to 0. The third threshold may be specified in a protocol, or may be configured by the network device in a broadcast manner or in a unicast manner, or may be a preset value.

Optionally, the quality of service is represented by using an RSRP and/or an RSPR. Third thresholds respectively corresponding to the RSRP and the RSRQ may be the same or may be different. This is not limited in this solution.

In this solution, the terminal device periodically wakes up to measure the quality of service of the serving cell, to determine whether the terminal device is within the coverage of the wake-up information (that is, a WUR reference signal or WUR signaling). When determining that the terminal device is not within the coverage of the wake-up information, the terminal device keeps waking up to reduce a probability that the terminal device misses important information (for example, the paging message, the system message, or the synchronization signal). When determining that the terminal device is within the coverage of the wake-up information, the terminal device continues to enter the doze state to save power consumption, to balance the power consumption and communication quality.

With reference to the third aspect, in a possible design, if time at which the terminal device enters the doze state reaches the wake-up periodicity or time at which the terminal device enters the doze state reaches the wake-up periodicity and receives no wake-up information, before the terminal device enters the wake-up state from the doze state, the method further includes: After the terminal device enters the idle state or an inactive state, if reference signal quality of a cell on which the terminal device camps is greater than or equal to a second threshold in second time (it indicates that signal quality of the cell on which the terminal device camps is good, and may reflect that the terminal device is currently very likely to be within the coverage of the wake-up information), the terminal device enters the doze state from the idle state or the inactive state. The second time is greater than or equal to 0. The second threshold may be configured by the network device (for example, a base station) in a broadcast manner or in a unicast manner.

Optionally, the quality of the reference signal may be represented by one or more of the following: the RSRP and the RSRQ.

With reference to the third aspect, in a possible design, if time at which the terminal device enters the doze state reaches the wake-up periodicity or time at which the terminal device enters the doze state reaches the wake-up periodicity and receives no wake-up information, before the terminal device enters the wake-up state from the doze state, the method further includes: After a period of time since the terminal device enters the idle state or an inactive state, the terminal device enters the doze state from the idle state or the inactive state. The period of time is greater than or equal to 0.

With reference to the third aspect, in a possible design, before the terminal device enters the doze state, the method further includes: The terminal device sends capability information of a WUR to the network device, where the capability information of the WUR indicates that the terminal device supports use of the WUR to receive the wake-up information.

With reference to the third aspect, in a possible design, after the terminal device sends the capability information of the WUR to the network device, the method further includes: The terminal device receives indication information sent by the network device, where the indication information indicates that the terminal device receives the wake-up information via the WUR.

According to a fourth aspect, this application provides a wake-up apparatus. The wake-up apparatus may be a terminal device or a chip or a circuit disposed in a terminal device. The wake-up apparatus includes: a processing unit, configured to: if time at which the terminal device enters a doze state reaches a wake-up periodicity or time at which the terminal device enters a doze state reaches a wake-up periodicity and receives no wake-up information, enable the terminal device to enter a wake-up state from the doze state. The doze state is a state of receiving the wake-up information via a WUR, and the wake-up state is a state of receiving at least one of the following information: a paging message, a system message, and a synchronization signal.

With reference to the fourth aspect, in a possible design, the wake-up apparatus further includes a transceiver unit, configured to receive the wake-up periodicity sent by a network device.

Optionally, the wake-up periodicity is carried in an RRC connection release message.

With reference to the fourth aspect, in a possible design, the processing unit is further configured to: if quality of service of a serving cell of the terminal device is greater than or equal to a third threshold in third time, enable the terminal device to enter the doze state from the wake-up state; and if the quality of service of the serving cell of the terminal device is less than the third threshold in the third time, enable the terminal device to keep the wake-up state. The third time is greater than or equal to 0.

Optionally, the quality of service includes one or more of the following: a reference signal received power and reference signal received quality.

With reference to the fourth aspect, in a possible design, the processing unit is further configured to: after the terminal device enters an idle state or an inactive state, if reference signal quality of a cell on which the terminal device camps is greater than or equal to a second threshold in second time, enable the terminal device to enter the doze state from the idle state or the inactive state, where the second time is greater than or equal to 0.

With reference to the fourth aspect, in a possible design, the processing unit is further configured to: after a period of time since the terminal device enters the idle state or the inactive state, enable the terminal device to enter the doze state from the idle state or the inactive state, where the period of time is greater than or equal to 0.

With reference to the fourth aspect, in a possible design, the transceiver unit is further configured to send capability information of the WUR to the network device, where the capability information of the WUR indicates that the terminal device supports use of the WUR to receive the wake-up information.

With reference to the fourth aspect, in a possible design, the transceiver unit is further configured to receive indication information sent by the network device, where the indication information indicates that the terminal device receives the wake-up information via the WUR.

In any design of the third aspect or the fourth aspect, the wake-up state is any one of the following states: the idle state, the inactive state, and a connected state.

In any design of the third aspect or the fourth aspect, the wake-up information is a WUR reference signal. The WUS reference signal includes a preamble. Alternatively, the WUS reference signal includes a preamble and a postamble. Alternatively, the WUS reference signal includes a preamble, a training sequence or a midamble, and a postamble. The preamble (preamble) may be a synchronization sequence, the training sequence (midamble) represents an intermediate sequence, and the postamble (postamble) represents an end sequence. The three sequences may be the same, or may be different, for example, are inversed with each other. The WUS may also be a synchronization sequence.

In any design of the third aspect or the fourth aspect, the wake-up information is WUR signaling. The WUR signaling includes one or more of the following: a cell identity, a tracking area code (TAC), a public land mobile network (PLMN) identity, a configuration update indication, a cell access barring indication, a system message change indication (such as a paging system message change), an identity of the terminal device, and a group identity.

According to a fifth aspect, this application provides a communication apparatus, which is specifically the terminal device in the first aspect or the third aspect, and includes a processor and a transceiver. The transceiver is configured to receive and send various messages/information/signaling. A computer program includes program instructions. When the processor runs the program instructions, the communication apparatus is enabled to perform the method for waking up a terminal device in a communication network according to any one of the first aspect, the third aspect, or the possible implementations of the first aspect or the third aspect. The transceiver may be a radio frequency module, a combination of a radio frequency module and an antenna, or an input/output interface of a chip or a circuit in the communication apparatus. Optionally, the communication apparatus further includes a memory, and the memory is configured to store the computer program.

According to a sixth aspect, this application provides a computer-readable storage medium. The computer-readable storage medium stores program instructions, and when the program instructions are run on a computer, the computer is enabled to perform the method for waking up a terminal device in a communication network according to the first aspect, the third aspect, or any one of the possible implementations of the first aspect or the third aspect.

According to a seventh aspect, this application provides a program product including program instructions. When the program instructions are run, the method for waking up a terminal device in a communication network according to the first aspect, the third aspect, or any one of the possible implementations of the first aspect or the third aspect is performed.

According to an eighth aspect, this application provides an apparatus. The apparatus may be implemented in a form of a chip, or may be implemented in a form of a device. The apparatus includes a processor. The processor is configured to read and execute a program stored in a memory, to perform the method for waking up a terminal device in a communication network according to one or more of the first aspect to the third aspect, or the possible implementations of the first aspect to the third aspect. Optionally, the apparatus further includes a memory, and the memory is connected to the processor by using a circuit. Further, optionally, the apparatus further includes a communication interface, and the processor is connected to the communication interface. The communication interface is configured to receive data and/or a message that need/needs to be processed. The processor obtains the data and/or the message from the communication interface, processes the data and/or the message, and outputs a processing result through the communication interface. The communication interface may be an input/output interface.

Optionally, the processor and the memory may be physically independent units, or the memory may be integrated with the processor.

According to a ninth aspect, this application provides a communication system. The communication system includes the terminal device and the network device in the first aspect or the third aspect.

Implementation of embodiments of this application can reduce power consumption of the terminal device, and reduce a probability that the terminal device misses important information (for example, a paging message, a system message, and a synchronization signal), to balance the power consumption and communication quality.

### BRIEF DESCRIPTION OF DRAWINGS

To describe technical solutions of embodiments of this application more clearly, the following briefly describes accompanying drawings for describing embodiments.
FIG. 1 is a diagram of a network architecture of a communication system according to an embodiment of this application;
FIG. 2 is a schematic flowchart of a method for waking up a terminal device in a communication network according to an embodiment of this application;
FIG. 3a is a diagram of a frame format of a WUR reference signal according to an embodiment of this application;
FIG. 3b is a diagram of another frame format of a WUR reference signal according to an embodiment of this application;
FIG. 3c is a diagram of still another frame format of a WUR reference signal according to an embodiment of this application;
FIG. 4 is a diagram of an interaction procedure according to an embodiment of this application;
FIG. 5 is a diagram of another interaction procedure according to an embodiment of this application;
FIG. 6 is another schematic flowchart of a method for waking up a terminal device in a communication network according to an embodiment of this application;
FIG. 7 is a diagram of a structure of a wake-up apparatus according to an embodiment of this application; and
FIG. 8 is a diagram of a structure of a communication apparatus 1000 according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may mean A or B. The term "and/or" in this specification describes only an association relationship for associated objects, and indicates that three relationships may exist. For example, A and/or B may indicate the following three cases: Only A exists; both A and B exist; or only B exists. A and B may be singular or plural. In addition, "at least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural. Terms such as "first" and "second" do not limit a quantity and an execution sequence, and the terms such as "first" and "second" do not indicate a definite difference.

In this application, the term "example", "for example", or the like is used to represent giving an example, an illustration, or a description. Any embodiment or design scheme described as an "example" or "for example" in this application should not be explained as being more preferred or having more advantages than another embodiment or design scheme. Exactly, using of the word "example", "for example", or the like is intended to present a relative concept in a specific manner.

It may be understood that, in this application, "when", "if", and "in case of" all mean that an apparatus performs corresponding processing in an objective case, are not intended to limit time, does not require the apparatus to necessarily have a determining action during implementation, and do not mean that there is another limitation.

"At the same time" in this application may be understood as being at a same time point, or may be understood as being in a period of time, or may be understood as being in a same periodicity, and may be specifically understood with reference to a context.

In this application, an element represented in a singular form is intended to represent "one or more", but does not represent "one and only one", unless otherwise specified.

In addition, the terms "system" and "network" may be used interchangeably in this specification.

It should be understood that in embodiments of this application, "B corresponding to A" represents that B is associated with A, and B may be determined based on A. However, it should be further understood that determining B based on A does not mean that B is determined based on only A. B may alternatively be determined based on A and/or other information.

The technical solutions provided in embodiments of this application may be applied to a 5G new radio (new radio, NR) system, or may be applied to another communication system, provided that in the communication system, an entity needs to send transmission direction indication information, and another entity needs to receive the indication information and determine a transmission direction within a specific period of time based on the indication information. For example, the technical solutions provided in embodiments of this application may be further applied to a universal mobile telecommunications system (UMTS, universal mobile telecommunications system), a code division multiple access (code division multiple access, CDMA) system, a wireless local area network (wireless local area network, WLAN), a future wireless communication system, or the like. In embodiments of this application, the term "communication" may also be described as "data transmission", "information transmission", or "transmission".

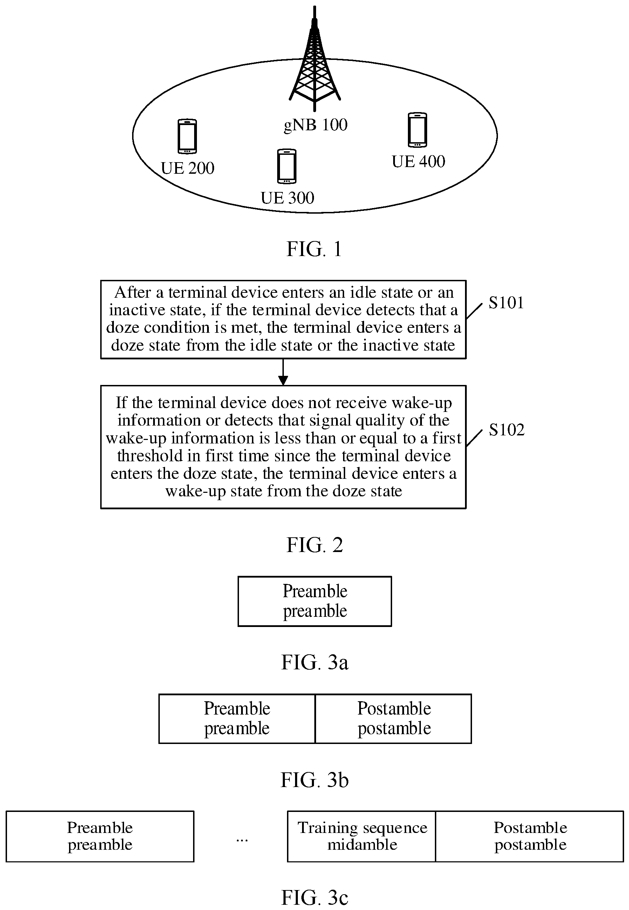

FIG. 1 is a diagram of a network architecture of a communication system according to an embodiment of this application. As shown in FIG. 1, the communication system includes at least one network device/radio access network device (for example, a gNB 100 in FIG. 1) and at least one terminal device (for example, a UE 200, a UE 300, and a UE 400 in FIG. 1). Optionally, the communication system may further include a core network device, which is not shown in FIG. 1. Quantities of network devices and terminal devices included in the communication system are not limited in this embodiment of this application. The UE is located within coverage of one or more cells (carriers) provided by a base station, and there may be one or more cells that serve the UE. When there are a plurality of cells that serve the UE, the UE may work in a carrier aggregation (carrier aggregation, CA) manner, a dual connectivity (dual connectivity, DC) manner, or a coordinated multipoint transmission manner. At least one cell provides more than one type of parameter set (numerology) to provide radio resources for the UE at the same time. It should be understood that the terminal device may be connected to the network device/radio access network device in a wireless manner. The terminal device may be located at a fixed position, or may be mobile.

The terminal device in this application may also be referred to as a user equipment (user equipment, UE), a mobile station (mobile station, MS), a mobile terminal (mobile terminal, MT), or the like, and is a device that provides voice and/or data connectivity to a user, such as a handheld device or a vehicle-mounted device having a wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), and a wireless terminal in a smart home (smart home).

The network device in this application may be an access network device. The access network device is a radio access network (radio access network, RAN) node (or device) that connects the terminal device to a wireless network, and may also be referred to as a base station. Currently, examples of some RAN nodes are: a further evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by the CU, functions of some or all of remaining protocol layers are distributed in the DU, and the CU centrally controls the DU. The access network device may also be a reader/writer device.

The core network device in this application may be a general term of a plurality of function entities used for user management, data transmission, and base station configuration on the network side, and includes an access and mobility management function (access and mobility management function, AMF) network element, a user plane function (user plane function, UPF) network element, a session management function (session management function, SMF) network element, and the like.

The network architecture in embodiments of this application is briefly described in the foregoing content. To better understand the technical solutions in embodiments of this application, the following briefly describes content related to embodiments of this application.

### 1. Paging (Paging)

In 5G NR, radio resource control (radio resource control, RRC) has three states: an idle (idle) state, an inactive (inactive) state, and a connected (connected) state. For details, refer to descriptions in an existing 5G NR standard. When a UE is in the idle (idle) state/inactive (inactive) state, the UE periodically receives a paging (paging) message. Specifically, the UE obtains a paging frame (paging frame, PF) and a location of a paging occasion (paging occasion, PO) in the PF through calculation based on a UE ID of the UE, and monitors a paging physical downlink control channel (paging physical downlink control channel, paging PDCCH) in the PO. The paging PDCCH includes paging downlink control information (paging downlink control information, paging DCI). If the UE detects the paging PDCCH, the UE receives a paging physical downlink shared channel (paging physical downlink shared channel, paging PDSCH) at a location scheduled by the paging PDCCH. A paging message (paging message) is included in the paging PDSCH, and the paging message indicates which UEs are paged. In other words, a plurality of UEs may receive a same PO, and the paging message specifically indicates which UEs in the UEs that receive the current PO are actually paged.

Generally, regardless of whether the UE performs the foregoing paging message receiving procedure in the idle state or the inactive state, or the UE receives data in the connected state, a same receiving module is used. In this application, for ease of description, a receiver that completes these functions (or performs related steps) is referred to as a main receiver.

### 2. Wake-up radio (wake-up radio, WUR)

The wake-up radio is also referred to as a wake-up receiver (wake-up receiver, WUR), and is mainly used for sensor communication in an early stage. However, with the emergence of the internet of things (IoT), it is considered that the WUR is applied to the internet of things. The WUR means that when a main communication module of a wireless communication station is in deep sleep, the wireless communication station enables only an ultra-low power-consumption wake-up receiver to listen to a wake-up packet. After receiving the wake-up packet, the wake-up receiver wakes up the communication main module to complete receiving and sending of data and signaling. In other words, the WUR is mainly a communication method in which a terminal receives a wake-up packet by using an ultra-low power-consumption circuit or a zero power-consumption circuit, to wake up a main circuit. Modulation (for example, binary on-off keying (On-Off Keying, OOK) modulation) of the wake-up packet is simple and a channel is narrow, which helps reduce power consumption and costs of the wake-up receiver. Wake-up time may be determined by a capability of a station or a terminal, and is usually several milliseconds. In addition, the WUR has no sending capability, and therefore, a program control register (program control register, PCR) of a STA (Station, terminal, or station) is needed to send a response (response) frame.

Specifically, in this specification, the low power-consumption circuit or the zero power-consumption circuit is referred to as the WUR, and certainly, may also be referred to as another name. A specific name is not limited. That the wake-up packet is received via the WUR mentioned in the specification may be understood as that the wake-up packet is received by using the low power-consumption circuit or the zero power-consumption circuit.

It should be understood that when the UE receives a paging (paging) message by using the main receiver, power consumption is high. This is because to receive the paging message, a receiving circuit of the main receiver needs to be used to receive a downlink signal first, and the paging message may occupy a large bandwidth. Therefore, receiving the paging message needs to consume specific power. In addition, when the UE performs blind detection on a received paging PDCCH, a decoding module such as a polar code (polar code, polar code) decoder needs to be used; and when the UE decodes the received paging PDSCH, a low-density parity-check code (low-density parity-check code, LDPC code) decoder needs to be used. However, power consumption of these decoders is high during operation. Moreover, because the main receiver is complex, reference power consumption of the main receiver is high during operation.

Therefore, to reduce the power consumption of receiving the paging message by the UE, in a possible implementation, when the main circuit is in an off state or a deep doze state, a WUR (wake-up receiver/radio) is used to receive a wake-up signal. After detecting the wake-up signal, the WUR triggers wakeup of the main circuit. After the main circuit is woken up, the UE may execute a paging message receiving process in an existing standard, for example, receive a synchronization signal/physical broadcast channel block (synchronization signal/PBCH block, SSB) for downlink synchronization and automatic gain control (automatic gain control, AGC) adjustment, and then receive the paging message on a PO.

The wake-up signal may indicate paging-related information, for example, whether a UE or a group of UEs is or are paged. The WUR may be implemented by using a small circuit/chip with a simple structure, and power consumption of the WUR is low, so that power consumption of receiving paging by the UE can be reduced. In addition, to ensure a power consumption gain, an OOK modulation scheme may be used for the wake-up signal, and a corresponding WUR may detect the wake-up signal by using an envelope detection method.

However, when the WUR detects the signal by using the envelope detection method, sensitivity of the receiver correspondingly decreases, and coverage of the wake-up signal is smaller than coverage of a downlink signal of a normal cellular network. In general network deployment, when selecting a deployment address of a base station, it is recommended that coverage of neighboring base stations intersects (or overlaps) to avoid coverage holes. However, because the coverage of the wake-up signal is less than the coverage of the downlink signal of the normal cellular network, the UE may be in a coverage hole, and therefore the UE receives no wake-up signal. In this case, the UE cannot receive the wake-up signal via the WUR, and cannot listen to the paging information by using the main circuit. In other words, the UE is in a state in which the UE cannot be paged. However, from the perspective of the UE, the UE does not know whether link quality is too poor or whether a network side does not page the UE.

Therefore, how to reduce a probability that the UE misses important information (for example, the paging message, a system message, and a synchronization signal) when the main circuit of the UE is in the deep doze state is not resolved.

Embodiments of this application provide a method for waking up a terminal device in a communication network, so that when in an idle state or having no service transmission, the terminal device may be enabled to enter a doze state (that is, a state of skipping performing an operation such as receiving a system message, a synchronization signal, and a paging message), to reduce power consumption of the terminal device. In addition, a wake-up condition of the terminal device is restricted to reduce a probability that the terminal device misses important information (for example, the paging message, the system message, and the synchronization signal), to ensure communication quality and balance the power consumption and the communication quality.

The following describes in detail the technical solutions provided in this application with reference to more accompanying drawings.

The technical solutions provided in this application are described by using a plurality of embodiments. For details, refer to the following descriptions. It may be understood that the technical solutions described in embodiments of this application may be combined to form a new embodiment, and parts that have a same or similar concept or solution may be mutually referenced or combined. The following describes each embodiment in detail.

Optionally, the terminal device in embodiments of this application may be a UE, for example, the UE 200, the UE 300, or the UE 400 in FIG. 1. A network device in embodiments of this application may be a radio access network device, for example, the gNB 100 in FIG. 1.

It should be understood that the "user" and the "UE" mentioned in this application are different representation forms of the terminal device. In actual application, the "user", the "UE", the "terminal device", and the "terminal" may be used interchangeably.

Optionally, wake-up information in this application is defined as follows: Information received via a WUR may be referred to as wake-up information, and the wake-up information may include identity information of the terminal, group identity information, configuration information of a cell, configuration information of a base station, configuration information of the terminal, and the like. In other words, the wake-up information may be understood as information that is received by the terminal by using a wake-up circuit and that is based on OOK modulation, or may be understood as information received by the terminal in a doze state.

FIG. 2 is a schematic flowchart of a method for waking up a terminal device in a communication network according to an embodiment of this application. In this part, WUR signaling or a newly designed WUR reference signal is periodically sent, to determine whether a terminal device is within coverage of the WUR signaling or the WUR reference signal, so as to determine a corresponding behavior of the terminal device. As shown in FIG. 2, the method for waking up a terminal device in a communication network includes but is not limited to the following steps.

S101: After the terminal device enters an idle state or an inactive state, if the terminal device detects that a doze condition is met, the terminal device enters a doze state from the idle state or the inactive state.

Optionally, after a period of time since the terminal device enters the idle (idle) state or the inactive (inactive) state, the terminal device may enter the doze state from the idle state or the inactive state, to reduce power consumption. In other words, the doze condition includes: A period of time elapses since the terminal device enters the idle state or the inactive state. The period of time is greater than or equal to 0. When the period of time is equal to 0, it may alternatively be understood as that the terminal device directly enters the doze state after entering the idle state or the inactive state. Certainly, after entering the idle state or the inactive state, the terminal device may directly enter the doze state from the idle state or the inactive state without determining whether duration after the terminal device enters the idle state or the inactive state reaches a preset period of time.

Optionally, after the terminal device enters the idle (idle) state or the inactive (inactive) state, if reference signal quality (or quality of service) of a cell on which the terminal device camps is greater than or equal to a second threshold in second time (for example, T), the terminal device enters the doze state from the idle state or the inactive state, to reduce power consumption. In other words, the doze condition includes: The reference signal quality (or quality of service) of the cell on which the terminal device camps is greater than or equal to the second threshold in the second time. The second threshold may be configured by a network device (for example, a base station) in a broadcast manner or in a unicast manner. The second time may be greater than or equal to 0. When the second time is equal to 0, it indicates that after the terminal device enters the idle state or the inactive state, if the terminal device detects that the reference signal quality of the cell on which the terminal device camps is greater than or equal to the second threshold, the terminal device may enter the doze state from the idle state or the inactive state. When the second time is greater than 0, it indicates that after the terminal device enters the idle state or the inactive state, if the terminal device detects that the reference signal quality of the cell on which the terminal device camps is greater than or equal to the second threshold in a period of time (that is, second time), the terminal device enters the doze state from the idle state or the inactive state. For example, the second time is equal to 1 second (s), and only when the reference signal quality that is of the cell on which the terminal device camps and that is measured in 1s is greater than or equal to the second threshold, the terminal device enters the doze state from the idle state or the inactive state. If the terminal device detects that the reference signal quality of the cell on which the terminal device camps is less than the second threshold in 1s, the terminal device keeps/maintains the idle state or the inactive state.

Optionally, the quality of the reference signal/quality of service in this embodiment of this application may be represented by one or more of the following: a reference signal received power (reference signal received power, RSRP) and reference signal received quality (reference signal received quality, RSRQ). Second thresholds respectively corresponding to the RSRP and the RSRQ may be the same or may be different. This is not limited in this embodiment of this application. The reference signal herein may be an SSB or a channel state information reference signal (channel state information reference signal, CSI-RS).

Optionally, after the terminal device enters the idle (idle) state or the inactive (inactive) state, if signal quality that is of wake-up information and that is measured by the terminal device is greater than a first threshold (in the second time), the terminal device may enter the doze state from the idle state or the inactive state, to reduce power consumption. After the terminal device enters the idle state or the inactive state, if the signal quality that is of the wake-up information and that is measured by the terminal device is less than the first threshold (in first time), the terminal device may keep the idle state or the inactive state. It should be understood that, after the terminal device enters the idle state or the inactive state, if the terminal device detects that the signal quality of the wake-up information is equal to the first threshold (in the second time), the terminal device may enter the doze state from the idle state or the inactive state, or the terminal device may keep the idle state or the inactive state. The first threshold may be configured by the network device (for example, the base station) in a broadcast manner or in a unicast manner, or may be specified in a protocol.

Optionally, the doze state may be at least one of a state of receiving, via the WUR, a message sent by the network side, a state of receiving the wake-up information via the WUR, a state of skipping receiving the paging message, a state of skipping receiving the SSB, a state of skipping performing measurement, and a state of performing relaxed measurement, or a combination of the states. The relaxed measurement herein may be understood as a longer measurement periodicity. It should be understood that the doze state in this embodiment of this application may have another name, for example, a sleep state. A name of the state is not limited in this embodiment of this application.

Optionally, the doze state may be understood as a special form of the idle (idle) state or the inactive (inactive) state. In other words, the doze state is a substate of the idle state or the inactive state. Certainly, the doze state may also be a state independent of the idle (idle) state and the inactive (inactive) state.

It should be understood that switching between various states is not limited in this embodiment of this application. To be specific, it is not limited a case that the terminal device needs to enter the idle state/inactive state first and then enters the doze state from the connected (connected) state. In other words, the terminal device may directly enter the doze state from the connected state, or may first enter the idle state/inactive state from the connected state, and then enter the doze state from the idle state/inactive state. Similarly, that the terminal device enters the connected state from the doze state may be: The terminal device may directly enter the connected state from the doze state, or enter the idle state/inactive state first from the doze state, and then enter the connected state from the idle state/inactive state.

S102: If the terminal device does not receive wake-up information or detects that the signal quality of the wake-up information is less than or equal to the first threshold in the first time since the terminal device enters the doze state, the terminal device enters a wake-up state from the doze state.

Optionally, after entering the doze state, the terminal device may determine, by periodically sending the wake-up information by the network device (for example, the base station), whether the terminal device is within coverage of the wake-up information, or whether the terminal device can maintain working in a WUR-based manner. If determining that the terminal device is not within the coverage of the wake-up information or cannot maintain working in the WUR-based manner, the terminal device is woken up, that is, enters the idle state/the inactive state, a state of performing measurement, a state of receiving the paging message, or the connected state from the doze state. Specifically, the network device periodically sends the wake-up information. If the terminal device does not receive wake-up information or detects that signal quality (where the signal quality herein may be represented by signal strength) of the wake-up information is less than or equal to the first threshold in the first time since the terminal device enters the doze state, (a main receiver/a main circuit of) the terminal device may enter the wake-up state from the doze state. The doze state may be a state of receiving the wake-up information via the WUR, and the wake-up state may be a state of receiving at least one of the following information: the paging message, a system message, a synchronization signal, downlink data, and the like. For example, the wake-up state may be any one of the idle state, the inactive state, and the connected state.

Optionally, after entering the doze state, the terminal device may enter the wake-up state from the doze state if the terminal device receives the wake-up information at any time. In this embodiment of this application, the terminal device supports receiving the wake-up information via the WUR, and the network side (that is, the base station or a core network device) also allows the terminal device to receive the wake-up information via the WUR.

Optionally, both the wake-up state and the doze state in this embodiment of this application are specific to the main receiver/main circuit of the terminal device. That the terminal device enters the doze state may be understood as that the main receiver/main circuit of the terminal device enters the doze state, and that the terminal device enters the wake-up state from the doze state may be understood as that the main receiver/main circuit of the terminal device enters the wake-up state from the doze state. After the main receiver/main circuit of the terminal device is woken up, a normal paging message receiving procedure may be executed, for example, the paging message receiving procedure described above.

Optionally, the first time is n periodicities for sending the wake-up information, and n is a positive integer. A value of n may be configured by the network device in a broadcast or unicast manner, or may be specified in a protocol. The periodicity for sending the wake-up information may be specified in a protocol, or may be configured by the network device. In other words, in step S 102, after the terminal device enters the doze state, if no wake-up information is received in more than n periodicities for sending the wake-up information or signal quality of the wake-up information measured in the n periodicities for sending the wake-up information is less than or equal to the first threshold, it indicates that a current location of the terminal device is not within the coverage of the wake-up information, and the terminal device enters the wake-up state from the doze state. The terminal device may receive the paging message, the system message, the synchronization signal, and the like in the wake-up state, so that a probability that the terminal device misses important information (for example, the paging message, the system message, and the synchronization signal) is reduced.

For example, n is equal to 1, and a periodicity for sending the wake-up information is 10 milliseconds (ms). After the terminal device enters the doze state, if no wake-up information is received in more than 10 ms or the signal quality of the wake-up information measured within 10 ms is less than or equal to the first threshold, the terminal device enters the wake-up state from the doze state.

Optionally, the periodicity for sending the wake-up information may be a periodicity that is separately designed for the WUR and that is used to determine whether the terminal device is within the coverage of the wake-up information, or may be a periodicity of WUR signaling.

Optionally, the first time may be a preset value, a value configured by the network device, or a value specified in a protocol. In other words, in step S 102, if the terminal device does not receive wake-up information or detects that the signal quality of the wake-up information is less than or equal to the first threshold in the first time since the terminal device enters the doze state, the terminal device determines that the terminal device is not within the coverage of the wake-up information, and then wakes up, that is, enters the wake-up state from the doze state. The terminal device in the wake-up state may receive the paging message, the system message, the synchronization signal, and the like, to reduce the probability that the terminal device misses the important information (for example, the paging message, the system message, and the synchronization signal).

Optionally, the wake-up information may be a WUR reference signal. In an implementation, FIG. 3a is a diagram of a frame format of a WUR reference signal according to an embodiment of this application. As shown in FIG. 3a, the WUR reference signal includes a preamble (preamble). The preamble (preamble) may be a synchronization sequence. In another implementation, FIG. 3b is a diagram of another frame format of a WUR reference signal according to an embodiment of this application. As shown in FIG. 3b, the WUR reference signal includes a preamble (preamble) and a postamble (postamble). The preamble (preamble) may be a synchronization sequence, and the postamble (postamble) represents an end sequence. The two sequences may be the same, or may be different, for example, are inversed with each other. In still another implementation, FIG. 3c is a diagram of still another frame format of a WUR reference signal according to an embodiment of this application. As shown in FIG. 3c, the WUR reference signal includes a preamble (preamble), a training sequence (midamble), and a postamble (postamble). The preamble (preamble) may be a synchronization sequence, the midamble represents an intermediate sequence, and the postamble (postamble) represents an end sequence. The three sequences may be the same, or may be different, for example, are inversed with each other.

It should be understood that FIG. 3a to FIG. 3c are merely examples of the WUR reference signal, and a specific format of the WUR reference signal is not limited. Alternatively, the format of the WUR reference signal may be a plurality of repetitions of each part in FIG. 3a, FIG. 3b, or FIG. 3c, or may be that FIG. 3a/FIG/3b/FIG. 3c is repeated as a whole.

Optionally, the wake-up information may be WUR signaling. The WUR signaling includes one or more of the following: a cell identity, a tracking area code (tracking area code, TAC), a public land mobile network (public land mobile network, PLMN) identity, a configuration update indication, a cell access barring indication, a system message change indication (such as a paging system message change), an identity of the terminal device, and a group identity. The system message change indication indicates whether a system message of a serving cell changes. The system message change may be a change in a system message related to a paging configuration, or may be a change in a system message related to a random access configuration. Specifically, for some system messages that are changed, the terminal device may be immediately woken up to obtain the changed system messages. For some other system messages, the terminal device may obtain changed system messages only after being woken up by the network side and before initiating access. Alternatively, after obtaining the system message change indication, the terminal device may determine, based on a requirement of the terminal device, whether to obtain a changed system message. The foregoing signaling may be periodically sent signaling, and a specific periodicity may be configured by the base station in a system message, or may be configured in a unicast manner.

Optionally, before step S102, the method for waking up a terminal device in a communication network may further include: The network device sends configuration information of the wake-up information (that is, the WUR reference signal or the WUR signaling) to the terminal device, and correspondingly, the terminal device receives the configuration information. The configuration information may be carried in a system information block (system information block, SIB) message. The configuration information includes one or more of the following: a periodicity for sending the wake-up information, a quantity of times of repeatedly sending the wake-up information, a frame structure type of the wake-up information, and a length of the first time. A part that is not included in the configuration information may be specified in a protocol. For example, if the configuration information includes the periodicity for sending the wake-up information and the quantity of times of repeatedly sending the wake-up information, the frame structure type of the wake-up information and the length of the first time may be specified in the protocol.

It should be understood that, if the network device is in a CU-DU split architecture, the CU sends the configuration information of the wake-up information (that is, the WUR reference signal or the WUR signaling) to the DU, and then the DU sends the configuration information to the terminal device.

Optionally, before step S102, the method for waking up a terminal device in a communication network may further include: After the terminal device enters the connected state (or before the terminal device enters the idle state, for example, before step S 101), the terminal device sends capability information of the WUR to the network device (for example, the base station), where the capability indication information of the WUR indicates that the terminal device supports receiving the wake-up information via the WUR. Correspondingly, the network device (for example, the base station) receives the capability information of the WUR. Then, the network device (for example, the base station) configures a WUR function for the terminal device based on a capability of the network device and/or a capability of the core network device. To be specific, the network device sends indication information to the terminal device, where the indication information indicates that the terminal device (may) receives the wake-up information (that is, the WUR reference signal or the WUR signaling) via the WUR. Correspondingly, the terminal device receives the indication information.

Optionally, the capability information of the WUR may be carried in an RRC connection setup request message, and the indication information may be carried in an RRC connection release message.

Optionally, after step S102, to be specific, after the terminal device enters the wake-up state from the doze state, it is assumed that the wake-up state is the idle state, after the terminal device enters the idle state from the doze state, the terminal device may always maintain the idle state, or may perform periodic measurement in the idle state. If the terminal device detects that quality of service/signal quality of a cell is greater than the first threshold, the terminal device may enter the doze state again, to reduce power consumption.

To better understand the technical solutions provided in embodiments of this application, the following describes, by using two examples, interaction procedures of the technical solutions provided in embodiments of this application.

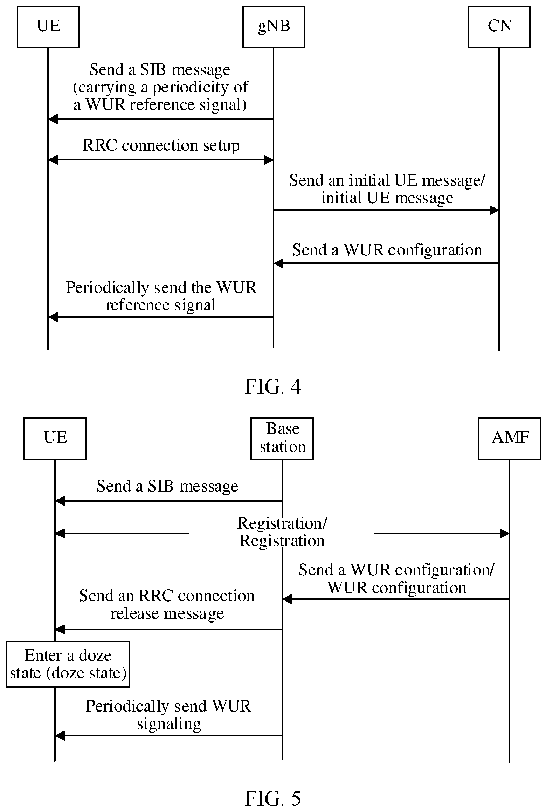

Example 1: FIG. 4 is a diagram of an interaction procedure according to an embodiment of this application. For example, a terminal device is a UE, and a network device is a gNB. A "CN" in FIG. 4 represents a core network (core network, CN) device. As shown in FIG. 4, the gNB sends a SIB message to the UE, where the SIB message includes configuration information of a WUR reference signal. The configuration information includes one or more of the following: a periodicity for sending the WUR reference signal, a quantity of times of repeatedly sending the WUR reference signal, a frame structure type of the WUR reference signal, and a length of first time. The UE and the gNB may establish an RRC connection by exchanging an RRC connection setup request message and an RRC connection setup response message. The RRC connection setup request message may carry capability information of a WUR. The gNB sends an initial UE message (initial UE message) to the core network device (the CN in FIG. 4), where the initial UE message may carry the capability information of the WUR. The core network device (the CN in FIG. 4) may return a WUR configuration to the gNB, where the WUR configuration may include indication information. The gNB may further send an RRC connection release message to the UE, where the RRC connection release message carries the indication information. Then, the gNB periodically sends the WUR reference signal.

Example 2: FIG. 5 is a diagram of another interaction procedure according to an embodiment of this application. For example, a terminal device is a UE, a network device is a base station, and a core network device is an AMF. As shown in FIG. 5, the base station sends a SIB message to the UE, where the SIB message includes configuration information of WUR signaling. The UE and the AMF may perform registration/registration (registration) by exchanging messages/signaling, and include capability information of a WUR in a message/signaling sent by the UE to the AMF. The AMF sends a WUR configuration (WUR configuration) to the base station, where the WUR configuration may include indication information. Then, the base station sends an RRC connection release message to the UE, where the RRC connection release message carries the indication information. After receiving the RRC connection release message, the UE can enter a doze state (doze state). Then, the gNB periodically sends the WUR signaling.

In embodiments of this application, when in the idle state or having no service transmission, the terminal device is enabled to enter the doze state (that is, a state of skipping performing an operation such as receiving the system message, the synchronization signal, and the paging message), to reduce power consumption of the terminal device. In addition, the network device periodically sends the wake-up information. After entering the doze state, the terminal device determines, by determining whether the terminal device receives the wake-up information (that is, the WUR reference signal or the WUR signaling) in a period of time, whether the terminal device is within the coverage of the wake-up information. When determining that the terminal device is not within the coverage of the wake-up information, the terminal device wakes up, to reduce a probability that the terminal device misses important information (for example, the paging message, the system message, and the synchronization signal), to balance the power consumption and communication quality.

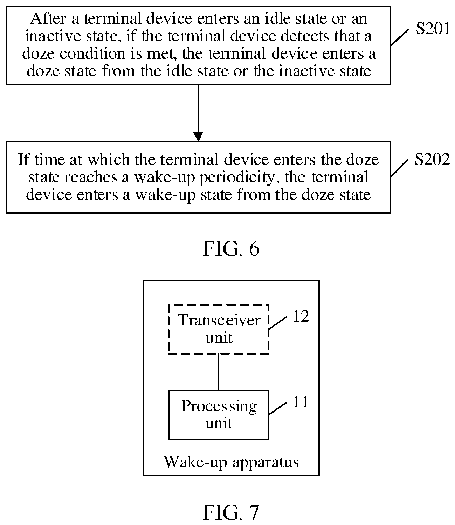

FIG. 6 is another schematic flowchart of a method for waking up a terminal device in a communication network according to an embodiment of this application. This part describes a case that a terminal device periodically wakes up, and detects whether the terminal device is within coverage of WUR signaling or a WUR reference signal, to determine a corresponding behavior of the terminal device. As shown in FIG. 6, the method for waking up a terminal device in a communication network includes but is not limited to the following steps.

S201: After the terminal device enters an idle state or an inactive state, if the terminal device detects that a doze condition is met, the terminal device enters a doze state from the idle state or the inactive state.

Optionally, for an implementation of step S201 in this embodiment of this application, refer to an implementation of step S101 in the embodiment shown in FIG. 2. Details are not described herein again.

Optionally, the terminal device may directly enter the doze state after entering the idle state or the inactive state.

S202: If time at which the terminal device enters the doze state reaches a wake-up periodicity, the terminal device enters a wake-up state from the doze state.

Optionally, after entering the doze state, the terminal device may periodically wake up or periodically enter the wake-up state (for example, the idle state) from the doze state. Specifically, a network device may send wake-up information to the terminal device only when the network device intends to page the terminal device, and does not send the wake-up information when the network device does not page the terminal device. Certainly, the network device may alternatively periodically send the wake-up information. A sending policy of the wake-up information is not limited in this embodiment of this application. If the time at which the terminal device enters the doze state reaches the wake-up periodicity, (a main receiver/a main circuit of) the terminal device may enter the wake-up state from the doze state, and perform measurement (in the wake-up state). Alternatively, if the time at which the terminal device enters the doze state reaches the wake-up periodicity and receives no wake-up information, (a main receiver/a main circuit of) the terminal device may enter the wake-up state from the doze state. Optionally, after entering the wake-up state, the terminal device may also perform measurement. The following describes a measurement process. The doze state may be a state of receiving the wake-up information via a WUR, and the wake-up state may be a state of receiving at least one of the following information: a paging message, a system message, a synchronization signal, downlink data, and the like. For example, the wake-up state may be any one of the idle state, the inactive state, and a connected state.

Optionally, after entering the doze state, the terminal device may enter the wake-up state from the doze state if the terminal device receives the wake-up information at any time. In this application, the terminal device supports receiving the wake-up information via the WUR, and the network side (that is, a base station or a core network device) also allows the terminal device to receive the wake-up information via the WUR.

Optionally, both the wake-up state and the doze state in this embodiment of this application are specific to the main receiver/main circuit of the terminal device. That the terminal device enters the doze state may be understood as that the main receiver/main circuit of the terminal device enters the doze state, and that the terminal device enters the wake-up state from the doze state may be understood as that the main receiver/main circuit of the terminal device enters the wake-up state from the doze state. After the main receiver/main circuit of the terminal device is woken up, a normal paging message receiving procedure may be executed, for example, the paging message receiving procedure described above.

Optionally, the wake-up periodicity may be configured by the network device (for example, the base station) in a broadcast manner or in a unicast manner, for example, configured by using an RRC connection release (release) message. Specifically, before step S202, the method for waking up a terminal device in a communication network may further include: The network device sends the wake-up periodicity to the terminal device, and correspondingly, the terminal device receives the wake-up periodicity, where the wake-up periodicity is carried in the RRC connection release message.

Optionally, after the terminal device enters the wake-up state from the doze state (or after step S202), the terminal device may perform normal measurement. Specifically, after the terminal device enters the wake-up state from the doze state, if quality of service of a serving cell of the terminal device is greater than or equal to a third threshold in third time, it indicates that the quality of service of the serving cell is good in this case, and reflects that the terminal device is currently very likely to be within coverage of the wake-up information, the terminal device enters the doze state from the wake-up state. In addition, the cell supports the WUR or an ultra-low power-consumption working mode, so that the terminal device may enter the doze state from the wake-up state. In other words, the terminal device may continue to enter the doze state. If the quality of service of the serving cell of the terminal device is less than the third threshold in the third time, it indicates that the quality of service of the serving cell is poor in this case, and reflects that the terminal device is currently very likely to be outside the coverage of the wake-up information, so that the terminal device may keep/maintain the wake-up state. If the quality of service of the serving cell of the terminal device is greater than the third threshold again in the third time, the terminal device may continue to enter the doze state. It should be understood that when the quality of service of the serving cell of the terminal device is equal to the third threshold in the third time, the terminal device may enter the doze state from the wake-up state, or may keep/maintain the wake-up state. Specifically, the behavior of the terminal device may be determined based on an actual situation. The third threshold may be specified in a protocol, or may be configured by the network device in a broadcast manner or in a unicast manner, or may be a preset value. The third time may be greater than or equal to 0. It should be understood that, when the third time is equal to 0, in other words, if the terminal device detects that the quality of service of the serving cell of the terminal device is greater than or equal to the third threshold, the terminal device continues to enter the doze state.

Optionally, after entering the wake-up state from the doze state, the terminal device not only needs to measure the quality of service of the serving cell, but also may determine whether the serving cell supports a WUR function, that is, whether the terminal device is allowed to receive the wake-up information via the WUR. Specifically, if the quality of service of the serving cell of the terminal device is greater than or equal to the third threshold in the third time, and the serving cell supports the WUR function or the serving cell allows the terminal device to receive the wake-up information via the WUR, the terminal device may enter the doze state from the wake-up state. In other words, the terminal device may continue to enter the doze state.

Optionally, after the terminal device enters the wake-up state from the doze state (or after step S202), the terminal may measure the received wake-up information. If the terminal device detects that signal quality of the wake-up information is greater than the first threshold (in the third time), the terminal device may continue to enter the doze state. If the terminal device detects that signal quality of the wake-up information is less than or equal to the first threshold (in the third time), the terminal device may maintain/keep the wake-up state. It should be understood that, if the terminal device detects that signal quality of the wake-up information is equal to the first threshold (in the third time), the terminal device continue to enter the doze state, or the terminal device may maintain/keep the wake-up state. In other words, when it is detected that the signal quality of the wake-up information is equal to the first threshold (in the third time), whether the terminal device specifically keeps the wake-up state or continues to enter the doze state may be determined based on an actual situation. This is not limited in this embodiment of this application. The first threshold may be configured by the network device (for example, the base station) in a broadcast manner or in a unicast manner, or may be specified in a protocol.

Optionally, the quality of service may be represented by using an RSRP and/or an RSPR. Third thresholds respectively corresponding to the RSRP and the RSRQ may be the same or may be different. This is not limited in this embodiment of this application.

Optionally, the wake-up information may be the WUR reference signal or the WUR signaling. For details, refer to corresponding descriptions in the embodiment shown in FIG. 2. Details are not described herein again.

Optionally, before step S202, after the terminal device enters the connected state (or before the terminal device enters the idle state, for example, before step S201), the terminal device sends capability information of the WUR to the network device (for example, the base station), where the capability indication information of the WUR indicates that the terminal device supports receiving the wake-up information via the WUR. Correspondingly, the network device (for example, the base station) receives the capability information of the WUR. Then, the network device (for example, the base station) configures a WUR function for the terminal device based on a capability of the network device and/or a capability of the core network device. To be specific, the network device sends indication information to the terminal device, where the indication information indicates that the terminal device (may receive) receives the wake-up information (that is, the WUR reference signal or the WUR signaling) via the WUR. Correspondingly, the terminal device receives the indication information.

In this embodiment of this application, when in the idle state or having no service transmission, the terminal device is enabled to enter the doze state (that is, a state of skipping performing an operation such as receiving the system message, the synchronization signal, and the paging message), to reduce power consumption of the terminal device. In addition, the terminal device periodically wakes up to measure the quality of service of the serving cell, to determine whether the terminal device is within the coverage of the wake-up information (that is, the WUR reference signal or the WUR signaling). When determining that the terminal device is not within the coverage of the wake-up information, the terminal device keeps waking up, to reduce a probability that the terminal device misses important information (for example, the paging message, the system message, or the synchronization signal). When determining that the terminal device is within the coverage of the wake-up information, the terminal device continues to enter the doze state to save power consumption, to balance the power consumption and communication quality.

In an optional embodiment, after entering the doze state, the terminal device may determine, based on a measurement result of the wake-up information (that is, the WUR reference signal or the WUR signaling), whether to enter the wake-up state. For example, the wake-up information herein may be a preamble, a synchronization sequence, or a dedicated reference signal. Specifically, when in the doze state, the terminal device may measure the wake-up information (that is, the WUR reference signal or the WUR signaling), and specifically, may perform periodic measurement. Certainly, before the terminal device performs periodic measurement, the terminal device obtains configuration information of the wake-up information used for measurement, such as a periodicity, a coding scheme, and a bit rate. Alternatively, when in the doze state, the terminal device may perform power-based measurement or other measurement. This is not limited in this specification. If the terminal device detects that the signal quality of the wake-up information (that is, the WUR reference signal or the WUR signaling) is greater than a fourth threshold, the terminal device may continue to maintain the doze state; otherwise, the terminal device enters the wake-up state. The fourth threshold may be broadcast by the base station, or configured by using dedicated signaling, or specified in a protocol. It should be understood that the fourth threshold may be a threshold for determining that the terminal switches from the doze state to the wake-up state, or a threshold for internal cell handover (when it is considered that a cell in which the terminal device in the doze state is located is inconsistent with a cell in which the terminal device in the wake-up state is located). Herein, the measurement based on the wake-up information may be determining a power of a received signal by using a WUR circuit. The wake-up information may be a separate signal or sequence, or may carry signaling of the wake-up information or cell configuration information, or may be understood as measuring a signal obtained through OOK modulation.

Further, if a result of measuring the wake-up information within a period of time is not greater than the fourth threshold, the terminal device enters the wake-up state.

It should be noted that either in the doze state or the wake-up state, the terminal device may be located in a same cell, or may be located in different cells. That the terminal device enters the wake-up state from the doze state may also be understood as cell selection or reselection. During implementation, it may be considered that the fourth threshold compared by the terminal in the doze state based on the result of measuring the wake-up information may be less than threshold information used by the terminal in the wake-up state for determining cell camping, cell reselection, or intra-frequency/inter-frequency measurement.

The foregoing describes in detail the method in this application. To better implement the foregoing solutions in embodiments of this application, embodiments of this application further provide a corresponding apparatus or device.

In embodiments of this application, the terminal device may be divided into functional modules based on the foregoing method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, or may be other division during actual implementation. A wake-up apparatus in embodiments of this application is described below in detail with reference to FIG. 7 to FIG. 8.

When an integrated unit is used, FIG. 7 is a diagram of a structure of a wake-up apparatus according to an embodiment of this application. The wake-up apparatus may be a terminal device or a chip or a circuit that may be disposed in a terminal device. As shown in FIG. 7, the wake-up apparatus includes a processing unit 11, and optionally, includes a transceiver unit 12.

In a design, the processing unit 11 is configured to: if the terminal device does not receive wake-up information or detects that signal quality of the wake-up information is less than or equal to a first threshold in first time since the terminal device enters a doze state, enable the terminal device to enter a wake-up state from the doze state. The doze state is a state of receiving the wake-up information via a wake-up radio WUR, and the wake-up state is a state of receiving at least one of the following information: a paging message, a system message, and a synchronization signal.

Optionally, the first time is n periodicities for sending the wake-up information, and n is a positive integer. Alternatively, the first time is a preset value or a value configured by a network device.

Optionally, the wake-up state is any one of the following states: an idle state, an inactive state, and a connected state.

Optionally, the wake-up information is a WUR reference signal. The WUS reference signal includes a preamble, or the WUS reference signal includes a preamble and a postamble; or the WUS reference signal includes a preamble, a training sequence, and a postamble.

Optionally, the wake-up information is WUS signaling. The WUS signaling includes one or more of the following: a cell identity, a tracking area code, a public land mobile network identity, a configuration update indication, a cell access barring indication, and a system message change indication.

Optionally, the processing unit 11 is further configured to: after the terminal device enters an idle state or an inactive state, if reference signal quality of a cell on which the terminal device camps is greater than or equal to a second threshold in second time, enable the terminal device to enter the doze state from the idle state or the inactive state, where the second time is greater than or equal to 0.

Optionally, the processing unit 11 is further configured to: after a period of time since the terminal device enters the idle state or the inactive state, enable the terminal device to enter the doze state from the idle state or the inactive state, where the period of time is greater than or equal to 0.

Optionally, the transceiver unit 12 is configured to receive configuration information of the wake-up information, where the configuration information of the wake-up information includes one or more of the following: a periodicity for sending the wake-up information, a quantity of times of repeatedly sending the wake-up information, a frame structure type of the wake-up information, and a length of the first time.

Optionally, the configuration information of the wake-up information is carried in a SIB message.

Optionally, the transceiver unit 12 is further configured to send capability information of the WUR to the network device, where the capability information of the WUR indicates that the terminal device supports use of the WUR to receive the wake-up information.

Optionally, the transceiver unit 12 is further configured to receive indication information sent by the network device, where the indication information indicates that the terminal device receives the wake-up information via the WUR.

It should be understood that the wake-up apparatus in this design may correspondingly perform the embodiment shown in FIG. 2, and the foregoing operations or functions of the units in the wake-up apparatus are separately used to implement corresponding operations of the terminal device in the embodiment shown in FIG. 2. For technical effects thereof, refer to the technical effects in the embodiment shown in FIG. 2. For brevity, details are not described herein again.

In another design, the processing unit 11 is configured to: if time at which the terminal device enters a doze state reaches a wake-up periodicity or time at which the terminal device enters a doze state reaches a wake-up periodicity and receives no wake-up information, enable the terminal device to enter a wake-up state from the doze state. The doze state is a state of receiving the wake-up information via a WUR, and the wake-up state is a state of receiving at least one of the following information: a paging message, a system message, and a synchronization signal.

Optionally, the transceiver unit 12 is configured to receive the wake-up periodicity sent by a network device.

Optionally, the wake-up periodicity is carried in an RRC connection release message.

Optionally, the processing unit 11 is further configured to: if quality of service of a serving cell of the terminal device is greater than or equal to a third threshold in third time, enable the terminal device to enter the doze state from the wake-up state; and if the quality of service of the serving cell of the terminal device is less than the third threshold in the third time, enable the terminal device to keep the wake-up state. The third time is greater than or equal to 0.

Optionally, the quality of service includes one or more of the following: a reference signal received power and reference signal received quality.

Optionally, the wake-up state is any one of the following states: an idle state, an inactive state, and a connected state.

Optionally, the wake-up information is a WUR reference signal. The WUS reference signal includes a preamble, or the WUS reference signal includes a preamble and a postamble; or the WUS reference signal includes a preamble, a training sequence, and a postamble.

Optionally, the wake-up information is WUS signaling. The WUS signaling includes one or more of the following: a cell identity, a tracking area code, a public land mobile network identity, a configuration update indication, a cell access barring indication, a system message change indication, and an identity of the terminal device.

Optionally, the processing unit 11 is further configured to: after the terminal device enters an idle state or an inactive state, if reference signal quality of a cell on which the terminal device camps is greater than or equal to a second threshold in second time, enable the terminal device to enter the doze state from the idle state or the inactive state, where the second time is greater than or equal to 0.

Optionally, the processing unit 11 is further configured to: after a period of time since the terminal device enters the idle state or the inactive state, enable the terminal device to enter the doze state from the idle state or the inactive state, where the period of time is greater than or equal to 0.

Optionally, the transceiver unit 12 is further configured to send capability information of the WUR to the network device, where the capability information of the WUR indicates that the terminal device supports use of the WUR to receive the wake-up information.

Optionally, the transceiver unit 12 is further configured to receive indication information sent by the network device, where the indication information indicates that the terminal device receives the wake-up information via the WUR.

It should be understood that the wake-up apparatus in this design may correspondingly perform the embodiment shown in FIG. 6, and the foregoing operations or functions of the units in the wake-up apparatus are separately used to implement corresponding operations of the terminal device in the embodiment shown in FIG. 6. For technical effects thereof, refer to the technical effects in the embodiment shown in FIG. 6. For brevity, details are not described herein again.

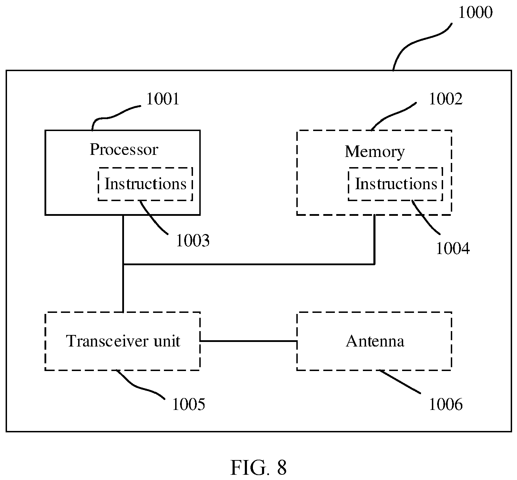

FIG. 8 is a diagram of a structure of a communication apparatus 1000 according to an embodiment of this application. As shown in FIG. 8, the communication apparatus 1000 provided in this embodiment of this application may be configured to implement the method described in the foregoing method embodiments. For details, refer to the descriptions in the foregoing method embodiments. The communication apparatus 1000 may be the foregoing terminal device.

The communication apparatus 1000 includes one or more processors 1001. The processor 1001 may be a general-purpose processor, a dedicated processor, or the like. For example, the processor may be a baseband processor or a central processing unit. The baseband processor may be configured to process a communication protocol and communication data. The central processing unit may be configured to: control an apparatus (for example, a UE, a base station, or a chip), execute a software program, and process data of the software program. The apparatus may include a transceiver unit, configured to input (receive) and output (send) a signal. For example, the apparatus may be a chip, and the transceiver unit may be an input and/or output circuit of the chip, or a communication interface. The chip may be used for a terminal device (for example, a UE). For another example, the apparatus may be a terminal device (for example, a UE), and the transceiver unit may be a transceiver, a radio frequency chip, or the like.

The communication apparatus 1000 includes the one or more processors 1001. The one or more processors 1001 may implement the method performed by the first device or the second device in any one of the foregoing embodiments.

Optionally, the processor 1001 may further implement another function in addition to the method in any one of the foregoing embodiments.

Optionally, in a design, the processor 1001 may also include instructions 1003. The instructions may be run on the processor, so that the communication apparatus 1000 performs the method described in any one of the foregoing method embodiments.

In another possible design, the communication apparatus 1000 may alternatively include a circuit, and the circuit may implement a function of the terminal device in the foregoing method embodiments.

In still another possible design, the communication apparatus 1000 may include one or more memories 1002. The memory stores instructions 1004, and the instructions may be run on the processor, so that the communication apparatus 1000 performs the method described in any one of the foregoing method embodiments. Optionally, the memory may further store data. Optionally, the processor may also store instructions and/or data. For example, the one or more memories 1002 may store the wake-up information, the indication information, or the configuration information of the WUR described in the foregoing embodiments, or other information in the foregoing embodiments. The processor and the memory may be separately disposed, or may be integrated together.

In still another possible design, the communication apparatus 1000 may further include a transceiver unit 1005 and an antenna 1006, or include a communication interface. The transceiver unit 1005 may be referred to as a transceiver machine, a transceiver circuit, or a transceiver, and is configured to implement a transceiver function of the apparatus by using the antenna 1006. The communication interface (not shown in the figure) may be used for communication between a terminal device and an access network device, or communication between a terminal device and a core network device. Optionally, the communication interface may be a wired communication interface, for example, an optical fiber communication interface.

The processor 1001 may be referred to as a processing unit, and controls an apparatus (for example, a communication device).

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, circuit), firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired manner, for example, an optical fiber, or a wireless manner, for example, infrared, wireless, or microwave. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a computer program product. The computer program product includes computer program code. When the computer program code runs on a computer, the computer is enabled to perform the method steps of the terminal device described in any one of the foregoing embodiments.

An embodiment of this application further provides a computer-readable storage medium. The computer-readable storage medium stores program instructions. When the program instructions are run on a computer, the computer is enabled to perform the method steps of the terminal device described in any one of the foregoing embodiments.

An embodiment of this application further provides an apparatus. The apparatus may be a chip. The chip includes a processor. The processor is configured to read and execute a computer program stored in a memory, to perform the method in any possible implementation of any one of the foregoing embodiments. Optionally, the chip further includes a memory, and the memory is connected to the processor by using a circuit or a wire. Further, optionally, the chip further includes a communication interface, and the processor is connected to the communication interface. The communication interface is configured to receive data and/or a signal that need/needs to be processed. The processor obtains the data and/or the signal from the communication interface, processes the data and/or the signal, and outputs a processing result through the communication interface. The communication interface may be an input/output interface.

Optionally, the processor and the memory may be physically independent units, or the memory may be integrated with the processor.

In another embodiment of this application, a communication system is further provided. The communication system includes a terminal device and a network device. The terminal device may perform the method in any one of the foregoing embodiments.

A person of ordinary skill in the art may understand that all or some of the procedures of the methods in embodiments may be implemented by a computer program instructing relevant hardware. The program may be stored in a computer-readable storage medium. When the program runs, the procedures of the foregoing method embodiments may be included. The foregoing storage medium includes any medium that can store program code, such as a ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for waking up a terminal device in a communication network, comprising:
if the terminal device does not receive wake-up information or detects that signal quality of the wake-up information is less than or equal to a first threshold in first time since a terminal device enters a doze state, entering, by the terminal device, a wake-up state from the doze state, wherein
the doze state is a state of receiving the wake-up information via a wake-up radio WUR, and the wake-up state is a state of receiving at least one of the following information: a paging message, a system message, and a synchronization signal.

2. The method according to claim 1, wherein the first time is n periodicities for sending the wake-up information, and n is a positive integer; or
the first time is a preset value or a value configured by a network device.

3. The method according to claim 1 or 2, wherein the wake-up state is any one of the following states: an idle state, an inactive state, and a connected state.

4. The method according to any one of claims 1 to 3, wherein the wake-up information is a WUR reference signal, and the WUS reference signal comprises a preamble; or
the WUS reference signal comprises a preamble and a postamble; or
the WUS reference signal comprises a preamble, a midamble, and a postamble.

5. The method according to any one of claims 1 to 3, wherein the wake-up information is WUS signaling, and the WUS signaling comprises one or more of the following: a cell identity, a tracking area code TAC, a public land mobile network PLMN identity, a configuration update indication, a cell access barring indication, and a system message change indication.

6. The method according to any one of claims 1 to 5, wherein the method further comprises:
after the terminal device enters the idle state or the inactive state, if reference signal quality of a cell on which the terminal device camps is greater than or equal to a second threshold in second time, entering, by the terminal device, the doze state from the idle state or the inactive state, wherein the second time is greater than or equal to 0.

7. The method according to any one of claims 1 to 5, wherein the method further comprises:
after a period of time since the terminal device enters the idle state or the inactive state, entering, by the terminal device, the doze state from the idle state or the inactive state, wherein the period of time is greater than or equal to 0.

8. The method according to any one of claims 1 to 7, wherein the method further comprises:
receiving, by the terminal device, configuration information of the wake-up information, wherein the configuration information of the wake-up information comprises one or more of the following: a periodicity for sending the wake-up information, a quantity of times of repeatedly sending the wake-up information, a frame structure type of the wake-up information, and a length of the first time.

9. The method according to claim 8, wherein the configuration information of the wake-up information is carried in a system information block SIB message.

10. The method according to any one of claims 1 to 9, wherein the method further comprises:
sending, by the terminal device, capability information of the WUR to the network device, wherein the capability information of the WUR indicates that the terminal device supports use of the WUR to receive the wake-up information.

11. The method according to claim 10, wherein after the sending, by the terminal device, capability information of the WUR to the network device, the method further comprises:
receiving, by the terminal device, indication information sent by the network device, wherein the indication information indicates that the terminal device receives the wake-up information via the WUR.

12. A wake-up apparatus, comprising:
a processing unit, configured to: in first time since a terminal device enters a doze state, if the terminal device does not receive wake-up information or detects that signal quality of the wake-up information is less than or equal to a first threshold, enable the terminal device to enter a wake-up state from the doze state, wherein
the doze state is a state of receiving the wake-up information via a wake-up radio WUR, and the wake-up state is a state of receiving at least one of the following information: a paging message, a system message, and a synchronization signal.

13. The apparatus according to claim 12, wherein the first time is n periodicities for sending the wake-up information, and n is a positive integer; or
the first time is a preset value or a value configured by a network device.

14. The apparatus according to claim 12 or 13, wherein the wake-up state is any one of the following states: an idle state, an inactive state, and a connected state.

15. The apparatus according to any one of claims 12 to 14, wherein the wake-up information is a WUR reference signal, and the WUS reference signal comprises a preamble; or
the WUS reference signal comprises a preamble and a postamble; or
the WUS reference signal comprises a preamble, a midamble, and a postamble.

16. The apparatus according to any one of claims 12 to 14, wherein the wake-up information is WUS signaling, and the WUS signaling comprises one or more of the following: a cell identity, a tracking area code TAC, a public land mobile network PLMN identity, a configuration update indication, a cell access barring indication, and a system message change indication.

17. The apparatus according to any one of claims 12 to 16, wherein the processing unit is further configured to:
after the terminal device enters the idle state or the inactive state, if reference signal quality of a cell on which the terminal device camps is greater than or equal to a second threshold in second time, enable the terminal device to enter the doze state from the idle state or the inactive state, wherein the second time is greater than or equal to 0.

18. The apparatus according to any one of claims 12 to 16, wherein the processing unit is further configured to:
after a period of time since the terminal device enters the idle state or the inactive state, enable the terminal device to enter the doze state from the idle state or the inactive state, wherein the period of time is greater than or equal to 0.

19. The apparatus according to any one of claims 12 to 18, wherein the apparatus further comprises a transceiver unit, configured to receive configuration information of the wake-up information, wherein the configuration information of the wake-up information comprises one or more of the following: a periodicity for sending the wake-up information, a quantity of times of repeatedly sending the wake-up information, a frame structure type of the wake-up information, and a length of the first time.

20. The apparatus according to claim 19, wherein the configuration information of the wake-up information is carried in a system information block SIB message.

21. The apparatus according to any one of claims 12 to 20, wherein the apparatus further comprises the transceiver unit, configured to send capability information of the WUR to the network device, wherein the capability information of the WUR indicates that the terminal device supports use of the WUR to receive the wake-up information.

22. The apparatus according to claim 21, wherein the transceiver unit is further configured to receive indication information sent by the network device, wherein the indication information indicates that the terminal device receives the wake-up information via the WUR.

23. A communication apparatus, comprising a processor and a transceiver, wherein the transceiver is configured to send and receive information, a computer program comprises program instructions, and when the processor runs the program instructions, the communication apparatus is enabled to perform the method according to any one of claims 1 to 11.

24. A computer program product comprising program instructions, wherein when the program instructions are run on a computer, the computer is enabled to perform the method according to any one of claims 1 to 11.

25. A computer-readable storage medium, wherein the computer-readable storage medium stores program instructions, and when the program instructions are run, the method according to any one of claims 1 to 11 is performed.
